# EUROPÄISCHE PATENTANMELDUNG

(11) **EP 4 721 832 A1**
(43) Veröffentlichungstag der Anmeldung: **08.04.2026**
(21) Anmeldenummer: 25195084.6
(22) Anmeldetag: 11.08.2025
(51) Int. Cl.: B01D 29/05, B01D 29/15, B01D 29/58, B01D 29/88, B01D 29/90, B01D 35/027, B01D 36/02, C02F 1/00, A47J 31/60, C02F 1/28

(54) **SAUGFILTERPATRONE**

(30) Priorität: 02.10.2024 DE 102024128641
(71) Anmelder: ACLARIS GmbH, Lindau Zweigniederlassung Rebstein, 9445 Rebstein (CH)
(72) Erfinder: Dr. Heitele, Bernd, 9437 Marbach (CH)
(74) Vertreter: RavensPAT Patentanwälte Partnerschaft mbB

(57) **Zusammenfassung**

Die vorliegende Erfindung betrifft eine Saugfilterpatrone für den Einsatz in einen Wassertank, mit einem wasserdicht geschlossenen Gehäuse, einem Wassereinlass in das Gehäuse, einem Wasserauslass aus dem Gehäuse, einer wasserleitend zwischen Wassereinlass und Wasserauslass angeordneten Aufstromkammer und einer stromabwärts davon angeordneten Abstromkammer, wobei das Gehäuse einen Deckel umfasst, welcher das Gehäuse stromaufwärts der Abstromkammer wasserdicht verschließt. Diese zeichnet sich dadurch aus, dass im Deckel eine Struktur zur Fließrichtungsumkehr für das die Saugfilterpatrone durchströmende Wasser von Aufstrom in Abstrom ausgebildet ist, wobei im Deckel ein Aktivkohlevlies angeordnet ist

## Beschreibung

### Stand der Technik

Zur Aufbereitung von in Wassertanks bevorratetem Wasser, z.B. für Heißgetränkemaschinen, wie Kaffeemaschinen, Teemaschinen und dgl., ist die Verwendung von Saugfilterpatronen bekannt. Dazu wird mittels Unterdruck das Wasser durch die Saugfilterpatrone hindurchgesaugt. Der Unterdruck wird von einer in der betreffenden Maschine angeordneten Wasserpumpe erzeugt. Dabei fließt das Wasser über eine in der Saugfilterpatrone angeordnete Filterstrecke.

Solche Filterstrecken umfassen in der Regel als Schüttgut bevorratetes Gemisch aus Ionentauscherharz und Aktivkohle, wie z.B. in der EP 1 802 224 B1, Absatz 4 beschrieben.

Bei der Inbetriebnahme solcher Saugfilterpatronen fällt während der ersten Zyklen sogenanntes Grauwasser an. Dabei handelt es sich um mit aus der Saugfilterpatrone anfänglich ausgespülten Partikeln verunreinigtes Wasser. Dies ist eine technisch bedingte aber unerwünschte Eigenschaft von neu in Betrieb zu nehmenden Saugfilterpatronen.

### Aufgabe und Vorteile der Erfindung

Aufgabe der vorliegenden Erfindung ist es, bei einfachem Strukturaufbau, insbesondere im Hinblick auf eine möglichst einfache Fertigung einer solchen Saugfilterpatrone, die Menge an anfallendem Grauwasser zu reduzieren.

Die Lösung der Aufgabe erfolgt, ausgehend vom Oberbegriff des Anspruchs 1, durch dessen kennzeichnende Merkmale. In den Unteransprüchen sind vorteilhafte und zweckmäßige Weiterbildungen angegeben.

Dementsprechend betrifft die Erfindung eine Saugfilterpatrone für den Einsatz in einen Wassertank. Diese ist mit einem wasserdicht geschlossenen Gehäuse, einem Wassereinlass in das Gehäuse, einem Wasserauslass aus dem Gehäuse, einer wasserleitend zwischen Wassereinlass und Wasserauslass angeordneten Aufstromkammer und einer stromabwärts davon angeordneten Abstromkammer ausgestattet, wobei das Gehäuse einen Deckel umfasst, welcher das Gehäuse stromaufwärts der Abstromkammer wasserdicht verschließt. Die Saugfilterpatrone zeichnet sich dadurch aus, dass im Deckel eine Struktur zur Fließrichtungsumkehr für das die Saugfilterpatrone durchströmende Wasser von Aufstrom in Abstrom ausgebildet ist, wobei im Deckel ein Aktivkohlevlies angeordnet ist.

Dieses Aktivkohlevlies hat einerseits aufgrund der kleinen Porengröße von Aktivkohle eine sehr feine Filterwirkung und hält damit alle zu ihm angespülten Partikel zurück. Andererseits bewirkt seine Anordnung als Endfilter in der Filterstrecke, dass stromabwärts von ihm, mangels weiterem dort angeordnetem Filtergranulat, keine Partikel mehr im Strömungspfad der Saugfilterpatrone vorhanden sind, welche das Filtrat, also das über die Filteraufbereitungsstrecke geflossene Wasser, noch verunreinigen könnten.

Gemäß einer bevorzugten Ausführungsform kann das Aktivkohlevlies als Einlegeteil in der Form einer Scheibe ausgebildet sein. Dies ermöglicht eine Vormontage des Aktivkohlevlieses im Deckel. Dadurch kann nach der Befüllung der Aufstromkammer mit dem entsprechendem Filtermaterial, i. d. R. Harzgranulat, die Saugfilterpatrone ganz einfach durch Aufsetzen des mit dem Aktivkohlevlies bestückten Deckels komplettiert werden. Es sind keine weiteren Zusatzarbeitsschritte erforderlich.

Bevorzugt kann das Aktivkohlevlies zentral eine axiale Durchgangsöffnung aufweisen. Damit, kann es über eine entsprechende Aufnahme- oder Haltestruktur gesteckt und insbesondere fixiert werden.

Vorzugsweise kann auch eine Stützstruktur für das Aktivkohlevlies im oder am Deckel oder im Gehäuse angeordnet sein. Damit ist einerseits eine zuverlässige Positionierung und andererseits ein dauerhafter Verbleib des Aktivkohlevlieses in dieser Position möglich.

Die Stützstruktur für das Aktivkohlevlies kann einen rostartigen Aufbau aufweisen. Durch die Öffnungen im Rost ist die Stützstruktur für Wasser durchlässig. Andererseits bieten die Rostelemente Auflage- und/oder Abstützbereiche für das Aktivkohlevlies, die sich positiv auf dessen dauerhafte stabile Positionierung auswirken. Des Weiteren kann das Aktivkohlevlies zwischen dem Deckel und der Stützstruktur in einem dafür ausgebildeten Aufnahmeraum gesichert und korrekt positioniert aufgenommen werden.

Die Stützstruktur für das Aktivkohlevlies kann zentral einen axial ausgerichteten Flansch aufweisen. Auf diesen Flansch kann z. B. das Aktivkohlevlies zu seiner Montage aufgesteckt werden.

Des Weiteren kann der Flansch und/oder die Stützstruktur Verbindungselemente zur Verbindung mit dem Deckel aufweisen. Beispielsweise können Rastelemente ausgebildet sein, die mit komplementären Rastelementen am Deckel zusammenwirken können. Als Beispiel könnten Rastnasen und komplementäre Öffnungen ausgebildet sein.

Der Flansch kann im Weitern eine axiale Durchgangsöffnung aufweisen. Insbesondere kann er als Rohr ausgebildet sein. Dadurch bietet diese Ausführungsform die Möglichkeit, dass das Wasser durch den Flansch fliesen kann. Z.B. nachdem es die Filterstrecke in der Aufstromkammer und das Aktivkohlevlies passiert hat.

Durch die Ausbildung eines Zugangs vom Innenraum des Deckels zur axialen Durchgangsöffnung des Flansches kann eine Struktur zur Bewirkung der Fließrichtungsumkehr des durch die Saugfilterpatrone fließenden Wassers bereitgestellt werden. Beispielsweise kann der Flansch axial kürzer ausgebildet sein, als ein freier Abstand im Innenvolumen des Deckels bei darin eingesetzter Stützstruktur ausgebildet ist. Alternativ und/oder zusätzlich können weitere Öffnungen in der Wand des Flansches ausgebildet sein, die stromabwärts des Aktivkohlevlieses positioniert sind.

Im Weiteren kann die Stützstruktur und/oder der Flansch eine Aufnahme und/oder ein Lager für das stromaufwärtige Ende eines die Abstromkammer bildenden Rohres ausbilden. Dieses Rohr kann in die Durchgangsöffnung des Flansches eingesteckt werden, bzw. umgekehrt kann der Flansch, bei der Montage des Deckels auf das Gehäuse der Saugfilterpatrone, auf das die Abstromkammer bildende Rohr aufgesteckt werden.

Alternativ könnte dieses Rohr auch an eine Kontaktfläche an der Unterseite der Stützstruktur, als stromabwärts, angekoppelt werden.

Da das Aktivkohlevlies mit dem Rand seiner zentralen Durchgangsöffnung fest und dicht an der Außenwand des Flansches anliegt, ist gewährleistet, dass nur Wasser in die Abstromkammer gelangen kann, welches zuvor die Filterstrecke des Aktivkohlevlieses passiert hat. Entsprechendes gilt für den äußeren Rand des Aktivkohlevlieses.

In der Saugfilterpatrone kann gemäß einer Variante auch eine Bypassleitung zur parallelen Führung von Rohwasser zu dem in der Aufstromkammer fließenden Wasserstrom in der Form eines Doppelrohrspaltes ausgebildet sein. Damit kann eine Optimierung der Filterkapazität der Saugfilterpatrone bewirkt werden.

Als Doppelrohrspalt wir hier ein Spalt zwischen zwei koaxial ineinander geführter Rohrabschnitte verstanden. Besispielsweise kann dazu das die Abstromkammer bildende Rohr innerhalb eines eine radiale Innenwand der Aufstromkammer bildenden Rohres angeordnet sein. Der zwischen diesen beiden Rohrwänden ausgebildete Spalt wird dann als Doppelrohrspalt bezeichnet.

Durch die Bereitstellung einer Einstellvorrichtung zur Einstellung des wirksamen Durchflussquerschittes für die Bypassleitung kann auch eine Anpassung der Filterleistung an die Qualität des vor Ort verfügbaren Rohwassers vorgenommen werden. Es wird eine Annäherung an maximale Kapazitätsnutzung bei minimalem Volumen bewirkt.

Die Bypassleitung endet in Strömungsrichtung durch das Gehäuse vor dem Aktivkohlevlies, so dass der über die Bypassleitung fließende Wasserstrom zusammen mit dem die Aufstromkammer durchfließenden Hauptstrom filtriert wird.

### Figurenbeschreibung

Nachfolgend wird anhand der beigefügten Figuren eine Ausführungsform der Erfindung näher beschrieben.

Es zeigen:
- Figur 1:: Eine beispielhafte Schnittdarstellung einer Saugfilterpatrone mit einem Deckel und einem darin angeordneten Aktivkohlevlies.
- Figur 2:: Beispielhaft den Deckel aus Fig. 1 mit Aktivkohlevlies und einer Stützstruktur in Explosionsdarstellung.
- Figur 3:: Eine von der Figur abgewandelte Ausführung mit Bypass.

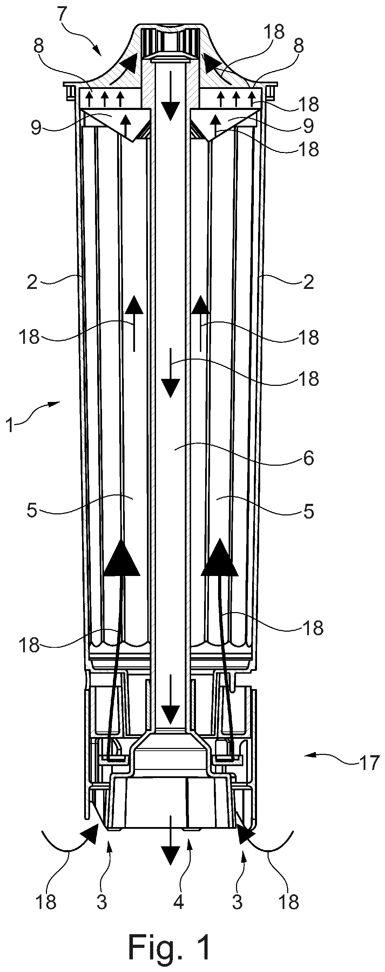

Im Detail zeigt die **Figur 1** eine Saugfilterpatrone 1 für den Einsatz in einen Wassertank. Ihr wasserdicht geschlossenes Gehäuse 2 weist einen Wassereinlass 3 auf, einen Wasserauslass 4, eine wasserleitend zwischen Wassereinlass 3 und Wasserauslass 4 angeordnete Aufstromkammer 5 und eine stromabwärts davon angeordnete Abstromkammer 6.

Ein Deckel 7 verschließt das Gehäuse 2 stromaufwärts der Abstromkammer 6 wasserdicht. Im Deckel 7 ist eine Struktur zur Fließrichtungsumkehr für das die Saugfilterpatrone durchströmende Wasser von Aufstrom in Abstrom ausgebildet und ein Aktivkohlevlies 8 angeordnet.

Weiterhin ist eine Stützstruktur 9 für das Aktivkohlevlies 8 bereitgestellt. Diese kann im oder am Deckel 7 oder im Gehäuse 2 angeordnet sein und einen Flansch 11 umfassen, der z.B. als Rohr ausgebildet sein kann.

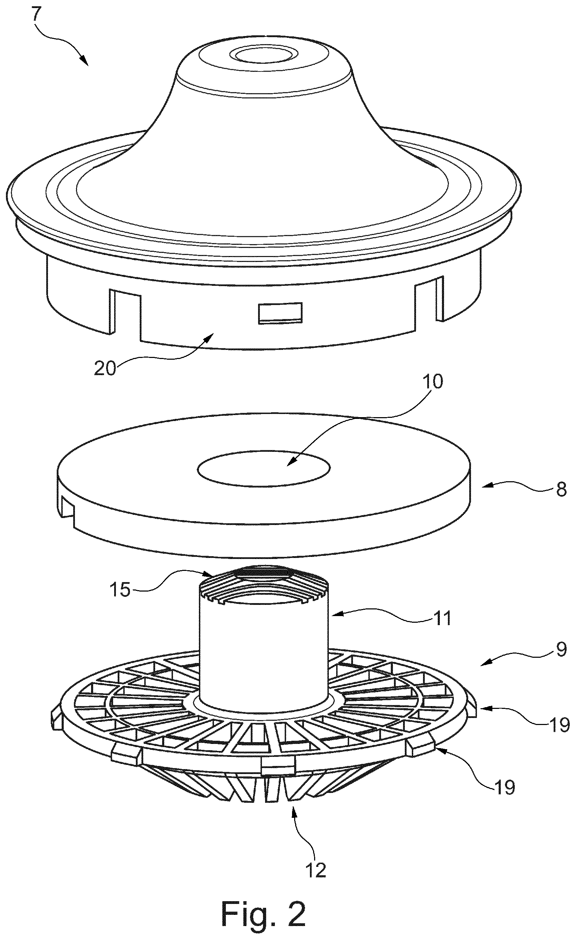

Die **Figur 2** zeigt in Explosionsdarstellung den Deckel 7, das Aktivkohlevlies 8 und die Stützstruktur 9.

An der Stützstruktur 9 und/oder dem Flansch 11 kann eine Aufnahme 12 für das stromaufwärtige Ende der Abstromkammer 6 ausgebildet sein. Zur fixierung der Stützstruktur am Deckel können diese jeweils ein Verbindungselement 19, 20 aufweisen. Z.B. i. d. F. von Nasen und komplementären Öffnungen oder Aussparungen.

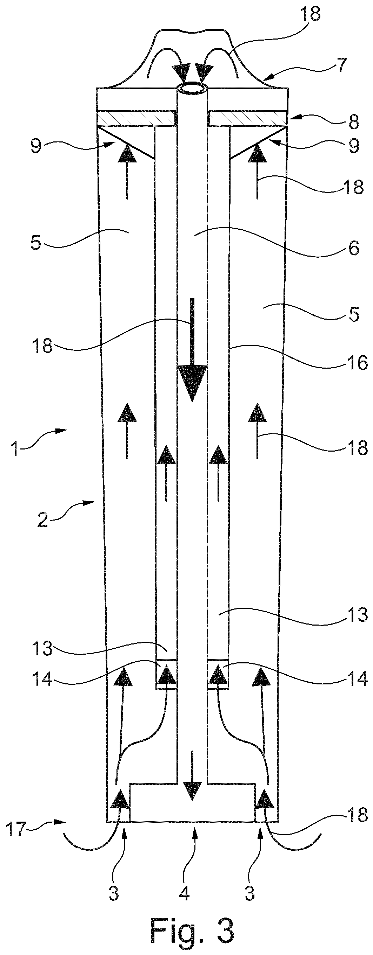

Die Ausführung gemäß **Figur 3** zeigt eine ähnliche wie die Figur 1, jedoch mit einer zusätzlichen Bypassleitung 13 und einer beispielhaft und nur schematisch dargestellten, vorzugsweise durch Verdrehen bedienbaren Einstellvorrichtung 14 für den Bypass.

Die Pfeile 18 stellen die Fließrichtung des durch die Saugfilterpatrone aufzubereitenden Wassers dar. Im Übrigen beziehen sich gleiche Bezugszeichen auf gleiche Merkmale in den offenbarten Figuren.

### Bezugszeichenliste

1 Saugfilterpatrone
2 Gehäuse
3 Wassereinlass
4 Wasserauslass
5 Aufstromkammer
6 Abstromkammer
7 Deckel
8 Aktivkohlevlies
9 Stützstruktur
10 Durchgangsöffnung Aktivkohlevlies
11 Flansch Stützstruktur
12 Aufnahme für Abstromkammer
13 Bypassleitung
14 Einstellvorrichtung Bypass
15 Durchgangsöffnung Flansch
16 Innenwandung der Aufstromkammer
17 filterseitiger Tankanschlusssockel
18 Pfeil
19 Verbindungselement
20 Verbindungselement

## Patentansprüche

1. Saugfilterpatrone (1) für den Einsatz in einen Wassertank, mit einem wasserdicht geschlossenen Gehäuse (2), einem Wassereinlass (3) in das Gehäuse (2), einem Wasserauslass (4) aus dem Gehäuse (2), einer wasserleitend zwischen Wassereinlass (3) und Wasserauslass (4) angeordneten Aufstromkammer (5) und einer stromabwärts davon angeordneten Abstromkammer (6), wobei das Gehäuse (2) einen Deckel (7) umfasst, welcher das Gehäuse (2) stromaufwärts der Abstromkammer (6) wasserdicht verschließt, **dadurch gekennzeichnet, dass** im Deckel (7) eine Struktur zur Fließrichtungsumkehr für das die Saugfilterpatrone durchströmende Wasser von Aufstrom in Abstrom ausgebildet ist, wobei im Deckel (7) ein Aktivkohlevlies (8) angeordnet ist.

2. Saugfilterpatrone (1) nach Anspruch 1, **dadurch gekennzeichnet, dass** das Aktivkohlevlies (8) als Einlegeteil in der Form einer Scheibe ausgebildet ist.

3. Saugfilterpatrone (1) nach Anspruch 1 oder 2, **dadurch gekennzeichnet, dass** das Aktivkohlevlies (8) zentral eine axiale Durchgangsöffnung (10) aufweist.

4. Saugfilterpatrone (1) nach einem der vorangehenden Ansprüche, **dadurch gekennzeichnet, dass** eine Stützstruktur (9) für das Aktivkohlevlies im oder am Deckel (7) oder im Gehäuse (2) angeordnet ist.

5. Saugfilterpatrone (1) nach einem der vorangehenden Ansprüche, **dadurch gekennzeichnet, dass** die Stützstruktur (9) für das Aktivkohlevlies (8) einen rostartigen Aufbau aufweist.

6. Saugfilterpatrone (1) nach einem der vorangehenden Ansprüche, **dadurch gekennzeichnet, dass** die Stützstruktur (9) für das Aktivkohlevlies (8) zentral einen axial ausgerichteten Flansch (11) aufweist.

7. Saugfilterpatrone (1) nach einem der vorangehenden Ansprüche, **dadurch gekennzeichnet, dass** der Flansch (11) als Rohr ausgebildet ist.

8. Saugfilterpatrone (1) nach einem der vorangehenden Ansprüche, **dadurch gekennzeichnet, dass** die Stützstruktur (9) und/oder der Flansch (11) als Aufnahme (12) für das stromaufwärtige Ende der Abstromkammer (6) ausgebildet ist.

9. Saugfilterpatrone (1) nach einem der vorangehenden Ansprüche, **dadurch gekennzeichnet, dass** eine Bypassleitung (13) zur parallelen Führung von Rohwasser zu dem in der Aufstromkammer (5) fließenden Wasserstrom in der Form eines Doppelrohrspaltes ausgebildet ist.

10. Saugfilterpatrone (1) nach einem der vorangehenden Ansprüche, **dadurch gekennzeichnet, dass** die Bypassleitung (13) in Strömungsrichtung durch das Gehäuse (2) vor dem Aktivkohlevlies (8) endet, so dass der über die Bypassleitung (13) fließende Wasserstrom zusammen mit dem die Aufstromkammer (5) durchfließenden Hauptstrom filtriert wird.

11. Saugfilterpatrone (1) nach einem der vorangehenden Ansprüche, **dadurch gekennzeichnet, dass** eine Einstellvorrichtung (14) zur Einstellung des wirksamen Durchflussquerschittes für die Bypassleitung ausgebildet ist.
